# EUROPEAN PATENT SPECIFICATION

(11) **EP 4 119 952 B1**
(45) Date of publication and mention of the grant of the patent: **09.07.2025**
(21) Application number: 21768712.8
(22) Date of filing: 17.02.2021
(51) Int. Cl.: G01N 35/02

(54) **AUTOMATIC ANALYZER**
AUTOMATISCHE ANALYSEVORRICHTUNG
ANALYSEUR AUTOMATIQUE

(30) Priority: 11.03.2020 JP 2020041725
(43) Date of publication of application: 18.01.2023
(73) Proprietor: Hitachi High-Tech Corporation, Minato-ku Tokyo 105-6409 (JP)
(72) Inventor: BABA, Shunsuke, Tokyo 105-6409 (JP); INABE, Toshiyuki, Tokyo 105-6409 (JP)
(74) Representative: Strehl & Partner mbB
(86) International application number: PCT/JP2021/005818
(87) International publication number: WO 2021/182038

(56) References cited:
- WO-A1-2017/070663
- WO-A1-2019/084468
- JP-A- 2009 204 549
- JP-A- 2018 531 391
- JP-A- H01 214 764
- JP-A- H01 214 764
- JP-A- S61 275 657
- US-A- 5 700 429
- US-A1- 2009 221 090
- US-A1- 2009 324 032
- US-A1- 2010 104 478
- US-A1- 2012 177 535
- US-B1- 6 329 139

## Description

### Technical Field

The invention relates to an automatic analyzer.

### Background Art

In an automatic analyzer for analyzing a sample, a sample which is put in a specimen vessel is mounted on the automatic analyzer. The automatic analyzer detects the mounted specimen vessel, dispenses the sample, and analyzes the component thereof, the concentration, and the like.

In the Patent Literature 1 as the prior art related to the vessel detection, barcode labels are respectively attached to an inner peripheral surface and an outer peripheral surface of a supporting unit of a vessel rack. Here, when the vessel is supported by the supporting unit, it is not possible to read the barcode label attached to the inner peripheral surface of the supporting unit. The Patent Literature 1 discloses a specimen analysis device in which after a barcode reader reads the barcode label on the outer peripheral surface, when the barcode label attached to the reagent vessel is read without reading the barcode label on the inner peripheral surface, the control unit determines that the vessel containing a reagent in accordance with the information read from the barcode label of the reagent vessel is supported by the supporting unit of the vessel rack.

### Citation List

### Patent Literature

Patent Literature 1: Japanese Patent Laid-Open No. 2008-20335

### Summary of Invention

### Technical Problem

In the above-mentioned automatic analyzer, when a barcode label is not attached to a vessel, the automatic analyzer cannot detect the vessel and cannot perform an analysis of a sample.

In order to solve the above problem, the invention aims to provide an automatic analyzer capable of detecting a specimen vessel even when a barcode label is not attached to the specimen vessel.

US 2009/221090 A1 discloses an automatic analyzer with the features in the preamble of present claim 1. Further conventional analyzers are described in JP H01 214764 A, WO 2017/070663 A1, US 2010/104478 A1, US 5 700 429 A, and WO 2019/084468 A1.

### Solution to Problem

The invention provides an automatic analyzer as defined in the appended claims.

### Advantageous Effects of Invention

According to the invention, it is possible to detect a specimen vessel with a barcode not attached there, without mounting a dedicated sensor.

### Brief Description of Drawings

[Fig. 1] Fig. 1 is a schematic diagram of an automatic analyzer having a function of detecting the presence or absence of a specimen vessel.
[Fig. 2A] Fig. 2A is a schematic diagram of the function of detecting the presence or absence of a specimen vessel according to an illustrative example.
[Fig. 2B] Fig. 2B is another schematic diagram of the function of detecting the presence or absence of a specimen vessel according to the illustrative example.
[Fig. 3] Fig. 3 is a diagram showing an example of a processing flow of the automatic analyzer having the function of detecting the presence or absence of a specimen vessel according to the illustrative example.
[Fig. 4] Fig. 4 is a schematic diagram of a function of detecting the presence or absence of a specimen vessel and a function of detecting a vessel type of the automatic analyzer according to an embodiment of the invention.

### Description of Embodiments

Hereinafter, an illustrative example not covered by the claimed scope and an embodiment of the invention will be described sequentially according to the drawings.

### Illustrative Example

The illustrative example is an automatic analyzer provided with a function of detecting the presence or absence of a specimen vessel. Specifically, the automatic analyzer includes a mounting unit for mounting a specimen vessel that stores a specimen to be analyzed, a first identifier arranged at a back position of the mounting unit, a reading unit arranged at a front position of the mounting unit and reading the first identifier, and a control unit for determining whether the specimen vessel is mounted on the mounting unit based on whether a contrast value of the light reflected from the first identifier is equal to or greater than a threshold, by using a signal read by the reading unit.

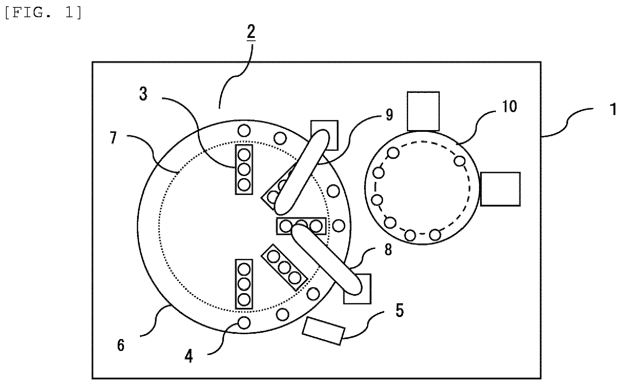

As illustrated in Fig. 1, the automatic analyzer 1 has a reagent specimen disk 2 for mounting a reagent bottle 3 storing a reagent and a specimen vessel 4 storing a specimen and a barcode reader 5 as a reading unit for reading an identifier attached to the specimen vessel 4. This identifier is used to identify the specimen of the specimen vessel. The reagent specimen disk 2 has a transport unit 6 for delivering the specimen vessel 4 using the specimen vessel mounting rack and a reagent holding unit 7 where a plurality of the reagent bottles 3 are arranged, and the transport unit 6 can carry the specimen vessel 4 independently of the reagent holding unit 7. The specimen and the reagent dispensed from the reagent specimen disk 2 using dispensing arms 8 and 9 are discharged to a reaction disk 10, where reaction is performed for a required time period.

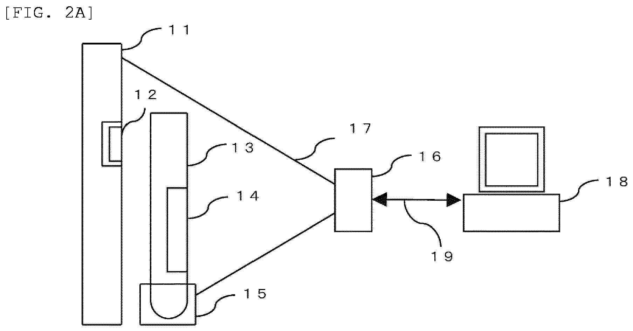

Fig. 2A is a schematic diagram of the function of detecting the presence or absence of a specimen vessel according to this example. Specifically, it shows the configuration of the automatic analyzer including a reagent specimen disk having a mounting unit for mounting a specimen vessel that stores a specimen to be analyzed on an outer peripheral portion thereof, a two-dimensional code arranged on the reagent specimen disk at a back position of the mounting unit, a barcode arranged on a side surface of the specimen vessel, a reading unit arranged at a front position of the mounting unit and capable of reading the two-dimensional code and the barcode, and a control unit for determining whether the specimen vessel is mounted on the mounting unit based on whether a contrast value of the light reflected from the two-dimensional code is equal to or greater than a threshold set in advance, by using an output signal of the reading unit.

This automatic analyzer includes a reagent specimen disk 11 corresponding to the reagent specimen disk 2 as illustrated in Fig. 1, a sensor 16 forming the barcode reader 5 and a sensor reading range 17, a control unit 18 for controlling the whole of the automatic analyzer, and a communication unit 19 for performing communication between the sensor 16 and the control unit 18.

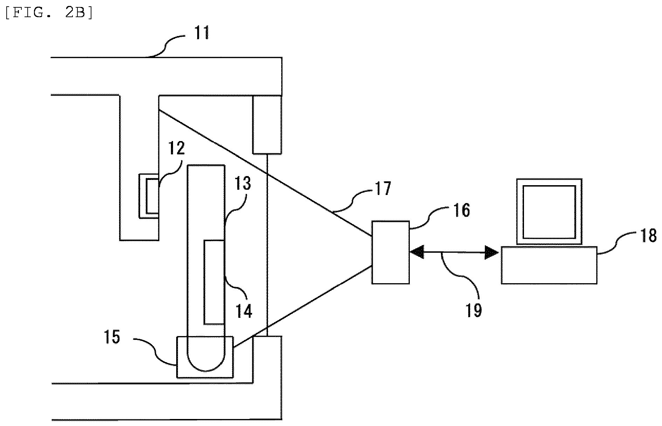

Further, as illustrated in Fig. 2B, the reagent specimen disk 11 may have a top cover and a bottom and therebetween it may have the two-dimensional code 12 as the first identifier suspended from the top cover and a specimen vessel mounting rack 15 as the mounting unit for mounting the specimen vessel 13. The position where the two-dimensional code 12 is suspended is near the boundary between the transport unit 6 and the reagent holding unit 7 in Fig. 1. The sensor 16 as the barcode reader can read the two-dimensional code 12 as the first identifier suspended from the top cover and the barcode label 14 as the second identifier attached to a side surface of the specimen vessel 13. Here, as the two-dimensional code 12, for example, the data matrix code ECC 200 is used. The control unit 18 performs the processing such as the reading information processing by running the processing program of a central processing unit (CPU) and a control of the whole system.

As illustrated in Figs. 2A and 2B, the sensor 16 has a sensor reading range 17 for reading the barcode label 14 attached to the specimen vessel and the two-dimensional code 12 of the reagent specimen disk 11. The sensor 16 transmits the reading information of the barcode label 14, the reading information of the two-dimensional code 12, and further a contrast value at a time of reading the two-dimensional code 12 to the control unit 18, through the communication unit 19. This contrast value may be output from the sensor 16 or may be calculated from the reading information received by the control unit 18.

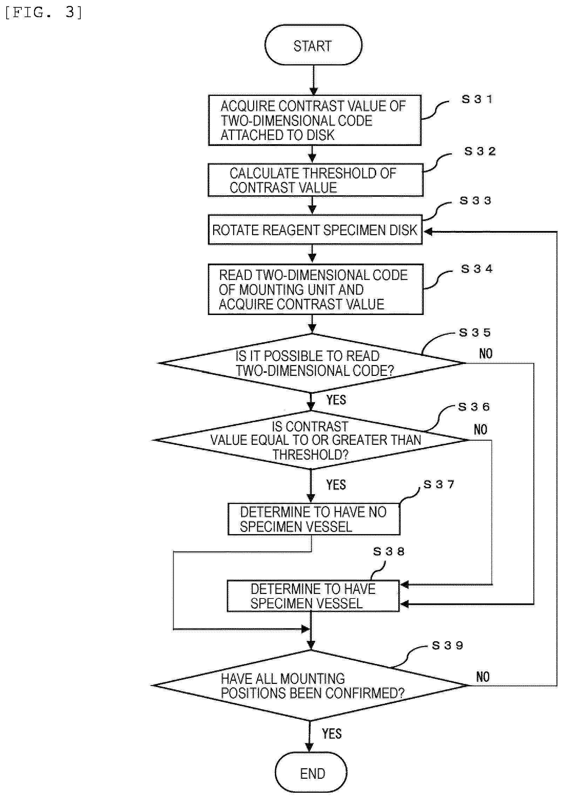

Fig. 3 is a diagram showing an example of a processing flow of the automatic analyzer having the function of detecting the presence or absence of a specimen vessel according to the illustrative example. The subject of the processing flow is the control unit 18. Prior to the confirming operation of the presence or absence of the specimen vessel, the control unit 18 of the automatic analyzer 1 reads the two-dimensional code 12 of the reagent specimen disk 11 by the sensor 16 with no specimen vessel mounted there and controls to acquire the contrast value of an image of the two-dimensional code 12, by using an output signal of the sensor 16 (Step 31, hereinafter referred to as S31).

Continuously, the control unit 18 calculates a threshold of the contrast value of the image of the two-dimensional code 12 (S32). Here, the threshold of the contrast value is calculated by using the sensor output signal of a black portion and a white portion of the two-dimensional code. For example, the contrast value of the black portion when there is no specimen vessel is 80 and when the contrast value when there is a specimen vessel is 20, the threshold may be defined as 50. Thereafter, the transport unit 6 of the reagent specimen disk 2 is moved and as illustrated in Figs. 2A and 2B, the specimen vessel mounting position on the specimen vessel mounting rack 15 is moved to in front of the two-dimensional code 12 (S33).

Then, the sensor 16 as the barcode reader reads the two-dimensional code 12 to acquire the contrast value (S34). When the two-dimensional code 12 cannot be read (No in S35), the control unit determines that there is a specimen vessel (S38). When the two-dimensional code can be read (YES in S35) and the contrast value is lower than the threshold calculated in advance (NO in S36), it determines that there is a specimen vessel (S38). When the two-dimensional code can be read (YES in S35) and the contrast value is equal to or greater than the threshold (S36), it determines that there is no specimen vessel (S37). After the above determination of the presence or absence of a specimen vessel, when the control unit does not confirm the presence or absence of a specimen vessel on all the mounting positions of the specimen vessel 13 (NO in S39), it rotates the reagent specimen disk 11 (S33) and confirms the presence or absence of a specimen vessel at the next mounting position. When confirming the above on all the mounting positions, the control unit finishes the operation of detecting the presence or absence of a specimen vessel (YES in S39).

According to the function of detecting the presence or absence of a specimen vessel of the example as mentioned above, it is possible to detect the presence or absence of the specimen vessel 13 by using the output signal of the sensor 16 as the barcode reader arranged to read the barcode 14 attached to the specimen vessel and thereby to reduce the cost because of saving another exclusive sensor and the like for detecting the presence or absence of a specimen vessel. It is no need to adjust the sensor and the like, hence to improve the maintenance performance.

### Embodiment

The embodiment is an automatic analyzer provided with a function of detecting the presence or absence of a specimen vessel and a function of detecting a vessel type. Specifically, in the automatic analyzer, a plurality of two-dimensional codes is arranged, and of the plural two-dimensional codes, based on the number of the two-dimensional codes read by the reading unit, the control unit determines each specimen vessel type.

The automatic analyzer of the embodiment is also provided with a reagent specimen disk 2 for mounting a reagent bottle 3 storing a reagent and a specimen vessel 4 storing a specimen and a barcode reader 5 for reading a barcode attached to the specimen vessel, similarly to the illustrative example. Further, as illustrated in Figs. 2A and 2B, it includes a specimen vessel mounting rack 15, a sensor 16 as a barcode reader for reading a two-dimensional code 12 as a first identifier attached to a reagent specimen disk 11 at a predetermined position and a barcode 14 as a second identifier attached to the specimen vessel 13, a control unit 18 for controlling the automatic analyzer, and a communication unit 19 for performing communication between the sensor 16 and the control unit 18.

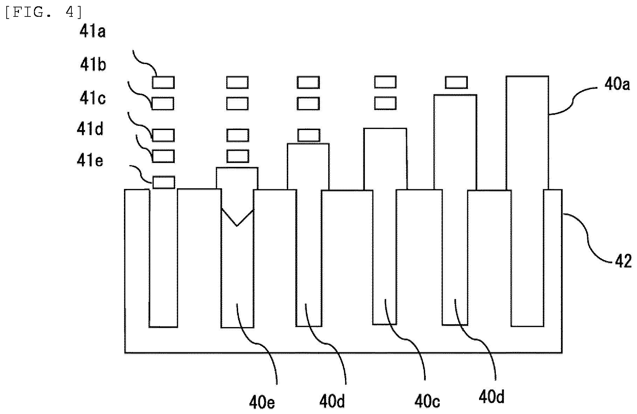

Fig. 4 is a schematic diagram of a function of detecting the presence or absence of a specimen vessel and a function of detecting a vessel type of the automatic analyzer according to the embodiment. A plurality of specimen vessels 40a to 40e of various types is mounted on a specimen vessel mounting rack 42 for mounting the specimen vessels.

Then, a plurality of two-dimensional codes 41a to 41e is arranged at a predetermined position of the reagent specimen disk 11. The predetermined position means, for example, the downwardly suspending portion of the top cover of the reagent specimen disk 2 as illustrated in Fig. 2B or an outer peripheral surface of the reagent holding unit 7. The vessel types of the specimen vessels 40a to 40e can be determined by the combination of the codes readable (YES in S35 of Fig. 3) and having the contrast value equal to or greater than a threshold (YES in S36), of the plural two-dimensional codes 41a to 41e. The specimen vessels 40a to 40e illustrated in Fig. 4 have various heights. For example, the vessels are 100 mm tube, 75 mm tube, 50 mm tube and the like. Here, the specimen vessel 40e shows a sample tube.

According to the configuration of the embodiment, in addition to the effect of the illustrative example, it is possible to determine the type of a specimen vessel by using the sensor 16 as the barcode reader set to read the barcode 14 attached to the specimen vessel and a sample within the specimen vessel, which makes it unnecessary to set a mechanism for exclusive use for type determination, hence to reduce the cost. Further, the maintenance performance is improved because of not requiring the adjustment of the exclusive determination mechanism.

### Reference Signs List

1: automatic analyzer
2, 11: reagent specimen disk
3: reagent bottle
4, 13, 40a to 40e: specimen vessel
5: barcode reader
6: transport unit
7: reagent holding unit
8, 9: dispensing arm
10: reaction disk
12, 41a to 41e: two-dimensional code
14: barcode
15, 42: specimen vessel mounting rack
16: sensor
17: sensor reading range
18: control unit
19: communication unit

## Claims

1. An automatic analyzer (1) comprising:
a mounting unit for mounting a specimen vessel (4, 13, 40a-40e) that stores a specimen to be analyzed,
a first identifier (12, 41a-41e) arranged at a back position of the mounting unit,
a reading unit (5, 16) arranged at a front position of the mounting unit and capable of reading the first identifier (12, 41a-41e), and
a control unit (18) for determining whether the specimen vessel (4, 13, 40a-40e) is mounted on the mounting unit based on whether a contrast value of the light reflected from the first identifier (12, 41a-41e) is equal to or greater than a threshold, by using a signal read by the reading unit (5, 16), wherein the first identifier (12, 41a-41e) is a two-dimensional code, and the contrast value is calculated from the signals of the black part and the white part of the two-dimensional code (12, 41a-41e),
**characterized in that**
the mounting unit is suitable for mounting specimen vessel types of various heights, and a plurality of the two-dimensional codes (12, 41a-41e) are arranged at the back position of the mounting unit, and
the control unit (18) is configured to determine the type of the specimen vessel (40a-40e) based on the number of the two-dimensional codes (12, 41a-41e) read by the reading unit (5, 16).

2. The automatic analyzer (1) according to claim 1, wherein the two-dimensional code (12, 41a-41e) is a data matrix.

3. The automatic analyzer (1) according to claim 1, wherein
a second identifier (14) is arranged on a side surface of the specimen vessel (4, 13, 40a-40e), and
the reading unit (5, 16) is configured to read the second identifier (14).

4. The automatic analyzer (1) according to claim 3, wherein the second identifier (14) is a barcode.

5. The automatic analyzer (1) according to claim 3, wherein the control unit (18) is configured to identify a specimen in the specimen vessel (4, 13, 40a-40e) based on the second identifier (14) read by the reading unit (5, 16).

6. The automatic analyzer (1) according to claim 1, further comprising:
a reagent specimen disk (2, 11),
wherein the mounting unit is located at an outer peripheral portion of the reagent specimen disk (2, 11).

7. The automatic analyzer (1) according to claim 6, wherein
the reagent specimen disk (2, 11) includes an upper cover, and
the two-dimensional code (12, 41a-41e) is suspended from the upper cover.

## Patentansprüche

1. Automatisches Analysegerät (1), umfassend:
eine Halterungseinheit zur Halterung eines Probengefäßes (4, 13, 40a-40e), in dem eine zu analysierende Probe aufbewahrt wird,
eine erste Kennung (12, 41a-41e), die an einer hinteren Position der Halterungseinheit angeordnet ist,
eine Leseeinheit (5, 16), die an einer vorderen Position der Halterungseinheit angeordnet und dazu in der Lage ist, die erste Kennung (12, 41a-41e) zu lesen, und
eine Steuereinheit (18), um basierend darauf, ob ein Kontrastwert des von der ersten Kennung (12, 41a-41e) reflektierten Lichts gleich oder größer als ein Schwellenwert ist, unter Verwendung eines von der Leseeinheit (5, 16) gelesenen Signals, zu bestimmen, ob das Probengefäß (4, 13, 40a-40e) auf der Halterungseinheit montiert ist, wobei die erste Kennung (12, 41a-41e) ein zweidimensionaler Code ist und der Kontrastwert aus den Signalen des schwarzen Teils und des weißen Teils des zweidimensionalen Codes (12, 41a-41e) berechnet wird,
**dadurch gekennzeichnet, dass**
die Halterungseinheit zur Halterung von Probengefäßtypen unterschiedlicher Höhe geeignet ist, und eine Vielzahl der zweidimensionalen Codes (12, 41a-41e) an der hinteren Position der Halterungseinheit angeordnet sind, und
die Steuereinheit (18) dazu konfiguriert ist, den Typ des Probengefäßes (40a-40e) anhand der Anzahl der von der Leseeinheit (5, 16) gelesenen zweidimensionalen Codes (12, 41a-41e) zu bestimmen.

2. Automatisches Analysegerät (1) nach Anspruch 1, wobei der zweidimensionale Code (12, 41a-41e) eine Datenmatrix ist.

3. Automatisches Analysegerät (1) nach Anspruch 1, wobei
eine zweite Kennung (14) an einer Seitenfläche des Probengefäßes (4, 13, 40a-40e) angeordnet ist, und
die Leseeinheit (5, 16) dazu konfiguriert ist, die zweite Kennung (14) zu lesen.

4. Automatisches Analysegerät (1) nach Anspruch 3, wobei die zweite Kennung (14) ein Strichcode ist.

5. Automatisches Analysegerät (1) nach Anspruch 3, wobei die Steuereinheit (18) dazu konfiguriert ist, eine Probe in dem Probengefäß (4, 13, 40a-40e) auf der Grundlage der von der Leseeinheit (5, 16) gelesenen zweiten Kennung (14) zu identifizieren.

6. Automatisches Analysegerät (1) nach Anspruch 1, ferner umfassend:
einen Reagenzien-Probenteller (2, 11),
wobei sich die Halterungseinheit an einem Außenumfangsabschnitt des Reagenzien-Probentellers (2, 11) befindet.

7. Automatisches Analysegerät (1) nach Anspruch 6, wobei
der Reagenzien-Probenteller (2, 11) eine obere Abdeckung aufweist, und
der zweidimensionale Code (12, 41a-41e) an der oberen Abdeckung angehängt ist.

## Revendications

1. Analyseur automatique (1) comprenant :
une unité de montage pour monter un récipient pour échantillon (4, 13, 40a-40e) qui stocke un échantillon à analyser,
un premier identifiant (12, 41a-41e) agencé à une position à l'arrière de l'unité de montage,
une unité (5, 16) de lecture agencée à une position à l'avant de l'unité de montage et apte à lire le premier identifiant (12, 41a-41e), et
une unité (18) de commande pour déterminer si le récipient pour échantillon (4, 13, 40a-40e) est monté sur l'unité de montage sur la base qu'une valeur de contraste de la lumière réfléchie depuis le premier identifiant (12, 41a-41e) est égale ou supérieure à un seuil, en utilisant un signal lu par l'unité (5, 16) de lecture, dans lequel le premier identifiant (12, 41a-41e) est un code bidimensionnel, et la valeur de contraste est calculée à partir des signaux de la partie noire et de la partie blanche du code bidimensionnel (12, 41a-41e),
**caractérisé en ce que**
l'unité de montage est appropriée pour monter des types de récipients pour échantillon de diverses hauteurs, et une pluralité des codes bidimensionnels (12, 41a-41e) sont agencés à la position à l'arrière de l'unité de montage, et
l'unité (18) de commande est configurée pour déterminer le type du récipient pour échantillon (40a-40e) sur la base du nombre des codes bidimensionnels (12, 41a-41e) lus par l'unité (5, 16) de lecture.

2. Analyseur automatique (1) selon la revendication 1, dans lequel le code bidimensionnel (12, 41a-41e) est une matrice de données.

3. Analyseur automatique (1) selon la revendication 1, dans lequel
un deuxième identifiant (14) est agencé sur une surface latérale du récipient pour échantillon (4, 13, 40a-40e), et
l'unité (5, 16) de lecture est configurée pour lire le deuxième identifiant (14).

4. Analyseur automatique (1) selon la revendication 3, dans lequel le deuxième identifiant (14) est un code-barres.

5. Analyseur automatique (1) selon la revendication 3, dans lequel l'unité (18) de commande est configuré pour identifier un échantillon dans le récipient pour échantillon (4, 13, 40a-40e) sur la base du deuxième identifiant (14) lu par l'unité (5, 16) de lecture.

6. Analyseur automatique (1) selon la revendication 1, comprenant en outre :
un disque (2, 11) pour réactifs et échantillons,
dans lequel l'unité de montage est située sur une partie périphérique extérieure du disque (2, 11) pour réactifs et échantillons.

7. Analyseur automatique (1) selon la revendication 6, dans lequel
le disque (2, 11) pour réactifs et échantillons inclut un couvercle supérieur, et
le code bidimensionnel (12, 41a-41e) est suspendu au couvercle supérieur.
